(19) Europäisches Patentamt
European Patent Office
Office européen des brevets

(11) Publication number: **0 296 310**
**A2**

(12) **EUROPEAN PATENT APPLICATION**

(21) Application number: 88102765.0

(22) Date of filing: 24.02.88

(51) Int. Cl.[4] C08G 65/22 , C08G 18/38 , C08G 18/50 , C08G 18/80 , C08G 18/10 , C07C 117/00 , C06B 45/10

(30) Priority: 22.06.87 US 64735

(43) Date of publication of application: 28.12.88 Bulletin 88/52

(84) Designated Contracting States: DE FR GB IT

(71) Applicant: Rockwell International Corporation
2230 East Imperial Highway
El Segundo, California 90245(US)

(72) Inventor: Frankel, Milton Bernard
5008 Veloz
Tarzana California 91356(US)
Inventor: Wilson, Edgar Roland
7888 Lilac Lane
Simi Valley California 93063(US)
Inventor: Woolery, Dean Owen, II
8111 Reseda Blvd. No. 325
Reseda California 91335(US)

(74) Representative: Wächtershäuser, Günter, Dr.
Tal 29
D-8000 München 2(DE)

(54) **Energetic azido curing agents.**

(57) Energetic azido curing agents are provided for curing hydroxy-terminated aliphatic polymers having alkyl azide groups.

EP 0 296 310 A2

Xerox Copy Centre

# ENERGETIC AZIDO CURING AGENTS

## Background of the Invention

### 1. Field of the Invention

This invention relates to the curing of polymeric compositions. This invention further relates to the curing of hydroxy-terminated aliphatic prepolymers having pendant alkyl azide groups.

### Description of Related Art

In the manufacture of solid rocket propellants, a polymeric substance is frequently employed as a binder to hold together fuel and oxidizer compounds of the propellant. The binder may, of course, supply fuel or oxidizer elements itself. Certain of the polymeric binders are prepared from hydroxy-terminated prepolymers. The addition of curing agents to these prepolymers causes cross-linking between the functional groups of the prepolymer, resulting in a polymer. The polymers physical properties vary with the degree of cross-linkage. This degree can be varied by the amount and type of curing agent added. In general, it is desired to cure the prepolymers to a degree such that the resulting polymer has the physical properties of an elastomer. Examples of prior art curing agents are isophorone diisocyanate, desmodyrl diisocyanate, 3-nitraza-1,5-pentane diisocyanate and N100, a polyfunctional isocyanate produced commercially by Mobay Chemical Company.

It is usually desired to suspend other compounds in the polymer binder composition. For instance, a solid rocket propellant composition could comprise such a polymer having particulate fuel and oxidizer suspended in it. Examples of suitable fuel would be light metals and light metal hydrides. Examples of suitable oxidizers would be perchlorates and nitrates.

## Summary of the Invention

According, there is provided by the present invention energetic azido curing agents, including isocyanate-terminated glycidyl azide polymers, and a method for producing same.

## Objects of the Invention

It is therefore an object of this invention to provide a method for curing prepolymers.

It is a further object of this invention to provide a curing method for compositions containing hydroxy-terminated aliphatic polymers having pendant alkyl azide groups.

It is an additional object of this invention to provide novel prepolymer and polymer compositions and procedures for preparing same.

Other objects and many attendant advantages will be evident from the following description.

## Description of the Preferred Embodiments

This objects of this invention are accomplished by utilizing as energetic azido curing agents compounds terminated with an isocyanate group as the curing agent for hydroxy-terminated aliphatic polymers.

Examples of hydroxy-terminated aliphatic polymers suitably cured according to the teachings of this invention are glycidyl azide polymers such as described in U.S. Pat. 4,268,450, incorporated herein by reference.

In preparing formulations according to the present invention, the curing compound of the invention is suitably mechanically mixed with the prepolymer to be cured. Curing temperatures range between about 25°C to about 60°C. Curing typically takes between from about 2 to about 48 hours.

It is well known that the degree of cross-linkage, or polymerization, in a polymer may be effected by the amount of curing agent used to cured the polymer. In general, when more curing agent is used, more cross-linkage is found, and the polymer is harder and less elastic. For solid rocket propellant composition, it is generally desirable that the composition be capable of at least 10% elongation at maximum stress, and about 40% would be more desirable. In curing hydroxy-terminated aliphatic polymers having pendant alkyl azide groups with the curing agents of the instant invention, a polymer of suitable elasticity is achieved with a reacted isocyanate to glycidyl azide polymer ratio of about 3 to 2.

By way of example and not limitation, the energetic azido curing agents of the present invention can be prepared as set forth in the following example.

## Example 1

An isocyanate-terminated glycidyl azide polymer, also known as glycidyl azide polymer diisocyanate, of the general formula (1)

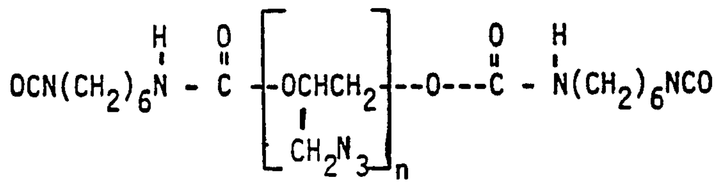

(1)

was prepared by reacting a compound of the general formula (2)

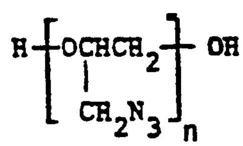

(2)

wherein n is an integer from about 2 to about 20, with an excess of hexamethylene diisocyanate.

In a suitable vessel equipped with a stirrer, a solution of 100 grams (0.27 equivalents) of low molecular weight glycidyl azide polymer (equivalent weight equal to 370) in reagent grade methylene chloride was added to 336 grams (1.08) of hexamethylene diisocyanate (HMDI) under a nitrogen atmosphere. The solution was stirred for 5 days at ambient temperature, concentrated, and passed through a wiped film distillation apparatus at 65°C and 20μ pressure to remove the excess HMDI. There remained 117.5 grams (80%) of the diisocyanate compound. The isocyanate equivalent weight was determined by reaction with excess dibutylamine, followed by back titration with standardized HCl and found to be 1042.

## Example 2

A isocyanate-terminated glycidyl azide polymer of the general formula (3)

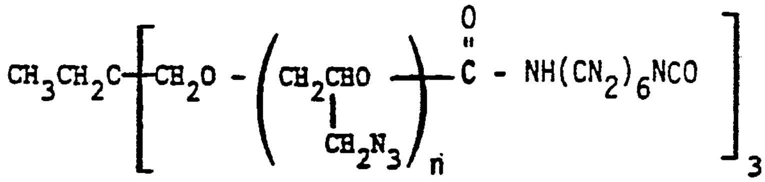

(3)

was prepared by initiating the polymerization of epichlorohydrin with trimethylolpropane to produce polyepichlorohydrin triol of general formula (4)

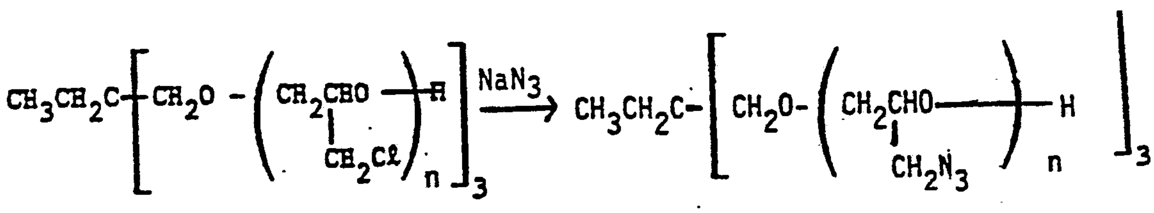


(4) (5)

following by reacting the compound of formula (4) with sodium azide in an appropriate polar solvent such as dimethylsulfoxide, dimethylformanide or polyethylene glycol to give the compound of formula (5), and where n is an integer from about 2 to about 20. The conversion to the azide polymer may also be accomplished in an aqueous phase using sodium azide and a fatty quaternary ammonium salt as a phase transfer catalyst.

The synthesis of Example 2 was based on initiating the polymerization of about 2775 grams of epichlorohydrin with about 134 grams of trimethylene propane to form the polyepichlorohydrin triol (pech-triol)(4), which was then converted to the compound of formula (5) about by reacting the polyepichlorohydrin triol with sodium azide in a polar organic solvent for about 12 hours and then purifying to produce the final product. The purified prepolymer (100g) was reacted with 43g of hexamethylene diisocyanate for 2-48 hours at 25 to 50° C. The excess isocyanate was removed by distillation at reduced pressure (60c.2μ) to yield the compound of formula (3).

## Example 3

A prepolymer composition was cured by mixing an isocyanate-terminated glycidyl azide polymer and from about 10% to about 90% by weight of hydroxy-terminated aliphatic polymer having pendant alkyl azide groups at a temperature of between 25° C and 50° C for about 1 hour. The mixing was followed by curing the reactants within a temperature range of 25° C to 60° C for from about 2 to 48 hours.

The mixing temperature may range from between ambient to about 50° C. Likewise, the curing of the reacting prepolymers may take place within a temperature range of from about 25° C to about 60° C depending upon the prepolymer composition which in turn may require as a curing time from about 2 to about 48 hours.

Obviously, numerous variations and modification may be made without departing from the present invention. Accordingly, it should be clearly understood that the form of the present invention described above is illustrative only and is not intended to limit the scope of the present invention.

## Claims

1. The process of curing a prepolymer composition comprising:
mixing an isocyanate-terminated glycidyl azide polymer and from 10% to 90%, by weight, of a hydroxy-terminated aliphatic polymer having pendant alkyl azide groups;
maintaining a temperature of between 20 °C and 50 °C; and for about one hour;
curing the reactants within a temperature range of from about 25 °C to about 60 °C for from about 2 to about 48 hours.

2. The process of curing a prepolymer composition according to Claim 1 wherein the isocyanate-terminated or substituted prepolymer is selected from the group of compounds of formulas (1) and (2):

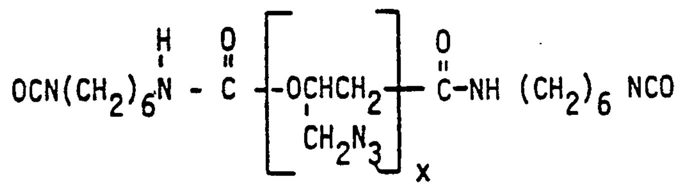

(1)

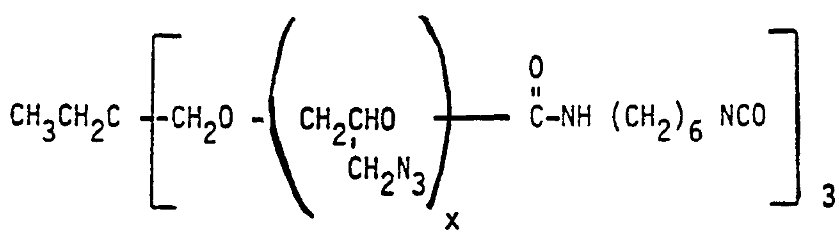

(2)

wherein x is an integer from about 2 to about 20.

3. A prepolymer composition comprising:P
from 10% to 90%, by weight, of a hydroxy-terminated aliphatic polymer having pendant alkyl azide groups; and from 10% to 90%, by weight, of an isocyanate-terminated or substituted polymer having pendant alkyl azide groups.

4. A process for producing an isocyanate-terminated glycidyl azide polymer of the general formula (1)

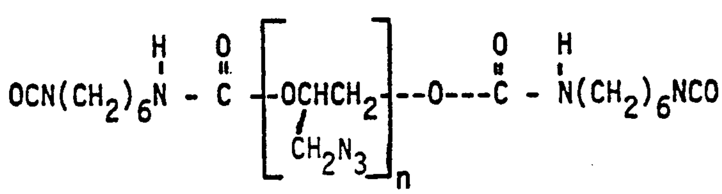

(1)

by reacting a compound of the general formula (2)

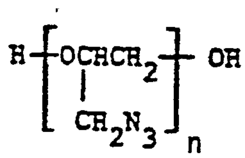

(2)

with hexamethylene diisocyanate in a non-polar organic solvent, and wherein n is an integer of from about 2 to about 20.

5. A process for producing an isocyanate-terminated glycidyl azide polymer of the general formula (1)

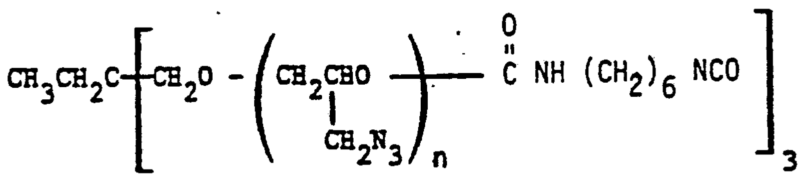

(1)

by initiating the polymerization of epichlorohydrin with trimethylolpropane to produce polyepichlorohydrin triol of the general formula (2)

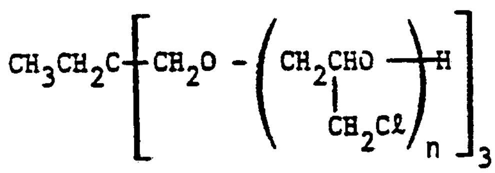

(2)

followed by reacting the compound of formula (2) with sodium azide in a polar organic solvent and wherein n is an integer of from about 2 to about 20.

6. As a composition of matter the isocyanate-terminated aliphatic polymer having a structural formula of

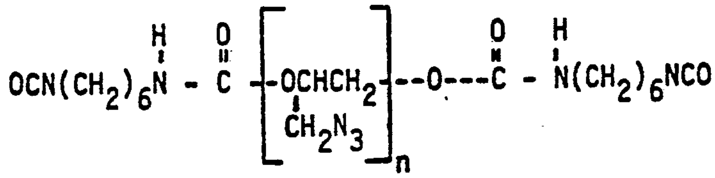

wherein n is an integer from about 2 to about 20.

7. As a composition of matter the polyepichlorohydrin triol of the general formula

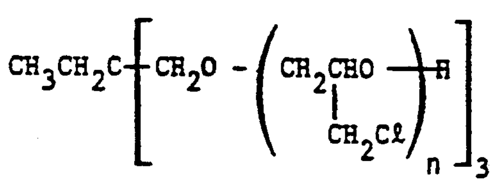

wherein n is an integer from about 2 to about 20.

8. As a composition of matter the isocyanate-terminated aliphatic polymer having a structural formula of:

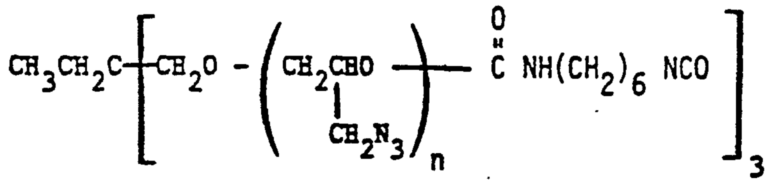

wherein n is an integer from about 2 to about 20.